**Europäisches Patentamt**

**European Patent Office**

**Office européen des brevets**

(19)

(11) Veröffentlichungsnummer : **0 520 981 B1**

(12)

# EUROPÄISCHE PATENTSCHRIFT

(45) Veröffentlichungstag der Patentschrift :
**31.08.94 Patentblatt 94/35**

(51) Int. Cl.⁵ : **H02J 3/24**

(21) Anmeldenummer : **90904593.2**

(22) Anmeldetag : **21.03.90**

(86) Internationale Anmeldenummer :
**PCT/DE90/00224**

(87) Internationale Veröffentlichungsnummer :
**WO 91/15047 03.10.91 Gazette 91/23**

(54) **VERFAHREN ZUM ERMITTELN EINES POLRADWINKELS EINES AN EIN ELEKTRISCHES VERSORGUNGSNETZ ANGESCHLOSSENEN GENERATORS SOWIE EINE ANORDNUNG HIERZU.**

(43) Veröffentlichungstag der Anmeldung :
**07.01.93 Patentblatt 93/01**

(45) Bekanntmachung des Hinweises auf die
Patenterteilung :
**31.08.94 Patentblatt 94/35**

(84) Benannte Vertragsstaaten :
**CH DE LI SE**

(56) Entgegenhaltungen :
**DE-B- 1 230 126**
**DE-C- 2 851 871**
**US-A- 4 412 171**

(56) Entgegenhaltungen :
**IEEE TRANSACTIONS ON POWER APPARA-
TUS AND SYSTEMS, vol. PAS99, No. 1, February 1980, New York, US, pp. 256-267 ; J.
MEISEL : "Transient stability augmentation
using a hierarchical control structure"
IEEE TRANSACTIONS ON POWER APPARA-
TUS AND SYSTEMS, vol. 103, No. 2, February
1984, New York, US, pp. 265-274 ; B. OOI et al.:
"Co-ordination of static var compensators
with long distance radial transmission system
for damping improvement"**

(73) Patentinhaber : **SIEMENS
AKTIENGESELLSCHAFT
Wittelsbacherplatz 2
D-80333 München (DE)**

(72) Erfinder : **LERCH, Edwin
Jahnstr. 8
D-8521 Poxdorf (DE)**

EP 0 520 981 B1

## Beschreibung

In einem elektrischen Versorgungsnetz, das Generatoren enthält, können zwischen den Generatoren Ausgleichsvorgänge entstehen, die zu kritischen Wirkleistungspendelungen führen. Um diese Wirkleistungspendelung zu bedämpfen, ist es bekannt, Blindleistungskompensatoren einzusetzen, die auch zur Spannungsstabilisierung des Versorgungsnetzes dienen. Für die Steuerung eines Blindleistungskompensators ist jedoch eine Meßgröße nötig, die Auskunft über die Wirkleistungspendelungen gibt. Eine solche Größe ist beispielsweise der Polradwinkel eines Generators. Dieser ist jedoch nur indirekt am Generator selbst bestimmbar. Daher sind bisher andere Meßgrößen, beispielsweise Frequenzsignale, für die Steuerung des Blindleistungskompensators herangezogen worden. Eine nach diesem Prinzip arbeitende Schaltungsanordnung ist aus der DE 28 51 871 bekannt. Aber auch diese Meßgröße ist nur bedingt zufriedenstellend, da die eigentlich benötigte Meßgröße die Frequenzdifferenz des Generators zum Versorgungsnetz ist, die wiederum nicht direkt meßbar ist.

Aus der DE AS 1 230 126 ist eine Einrichtung bekannt, bei der der Polradwinkel im mittelbarer oder unmittelbarer Nähe des Generators mit klemmspannungs- und klemmstromabhängigen Komponenten meßtechnisch erfaßt wird. Dabei wird die Synchronreaktanz $X_d$ vorgegeben. Bei dieser Einrichtung geht es um die Regelung langsamer statischer Vorgänge vor Ort am Generator.

Der Erfindung liegt die Aufgabe zugrunde, ein Verfahren sowie eine Anordnung anzugeben, mit deren Hilfe in einem elektrischen Versorgungsnetz der Polradwinkel eines Generators aus lokal an einer Leitung vorhandenen Meßgrößen ermittelt werden kann.

Diese Aufgabe wird erfindungsgemäß durch ein Verfahren gemäß Anspruch 1 gelöst.

Auf diese Weise steht ein Ausgangssignal $\delta$ zur Verfügung, das hinreichend genau Auskunft über die Größe des Polradwinkels gibt. Das Verfahren kann dabei an einem beliebigen Ort in einem Versorgungsnetz vorgesehen werden. Die zur Lösung der mathematischen Beziehungen vorgesehene Recheneinrichtung kann dabei als Rechner oder als analoge Schaltung ausgeführt sein.

Es ist günstig, wenn für die Längsreaktanz $\underline{Y}_L$ die transiente Generatorreaktanz $X_d'$ berücksichtigt wird. Auf diese Weise werden insbesondere die transienten Wirkleistungsungspendelungen erfaßt, die von besonderem Interesse sind, wobei eine Phasendifferenz zwischen dem Ort der Messung und der Generator-EMK erfaßt wird.

Es ist vorteilhaft, wenn das Ausgangssignal $\delta$ der Regeleinrichtung des Blindleistungskompensators als Regelgröße zugeführt wird, wobei der Blindleistungskompensator an die Leitung angeschlossen ist. Dadurch wird eine wirksame Dämpfung von Wirkleistungspendelungen im Netz erzielt. Dieses Verfahren ist besonders einfach, da dem Blindleistungskompensator keine zusätzlichen Meßwerte vom Generator zugeführt werden müssen. Es genügen die Meßwerte am Anschlußort des Blindleistungskompensators an der Leitung, wobei der Anschlußort als Referenzknoten dient.

Es kann auch über eine weitere Leitung ein weiterer Generator an das Versorgungsnetz angeschlossen sein und für jeden Generator in der Recheneinrichtung zunächst ein Ausgangssignal $\delta a$ und $\delta b$ und daraus ein Differenzsignal $\Delta \delta$ gebildet werden, das der Regeleinrichtung als Regelgröße zugeführt wird. Auf diese Weise ist das Verfahren auch auf Mehrgeneratorsysteme anwendbar, wobei auch Pendelungen zwischen ausgewählten Generatoren gezielt bedämpft werden können. Dabei können auch geeignete Auswahlkriterien für das Differenzsignal herangezogen werden.

Es ist günstig, wenn dynamische Änderungen der Längs- oder Querraktanz $\underline{Y}_L$ und $\underline{Y}_Q$ der Recheneinrichtung als zusätzliche Steuergröße zugeführt werden. Auf diese Weise können Änderungen im Versorgungsnetz, beispielsweise durch Schalthandlungen oder Netzstörungen, bei der Bestimmung des Polradwinkels berücksichtigt werden.

Eine erfindungsgemäße Lösung der oben genannten Aufgabe besteht auch in einer Anordnung zum Ermitteln des Polradwinkels für Wirkleistungspendelungen eines Generators, die gemäß Anspruch 4 ausgebildet ist. Diese Anordnung eignet sich insbesondere für die Anwendung mit Blindleistungskompensatoren, mit der besonders gute Ergebnisse bei der Bedämpfung von Wirkleistungspendelungen erzielt werden.

Ausführungsbeispiele der Erfindung werden im folgenden anhand der Zeichnung näher erläutert. Es zeigen:

FIG 1    eine Anordnung zur Polradwinkelerfassung in einem Versorgungsnetz, an dem über eine Leitung ein Generator angeschlossen ist,

FIG 2    ein weiteres Ausführungsbeispiel einer Anordnung zur Polradwinkelerfassung, die mit einem Blindleistungskompensator verbunden ist und

FIG 3    ein Ausführungsbeispiel, bei dem zwei Generatoren an ein Versorgungsnetz angeschlossen sind.

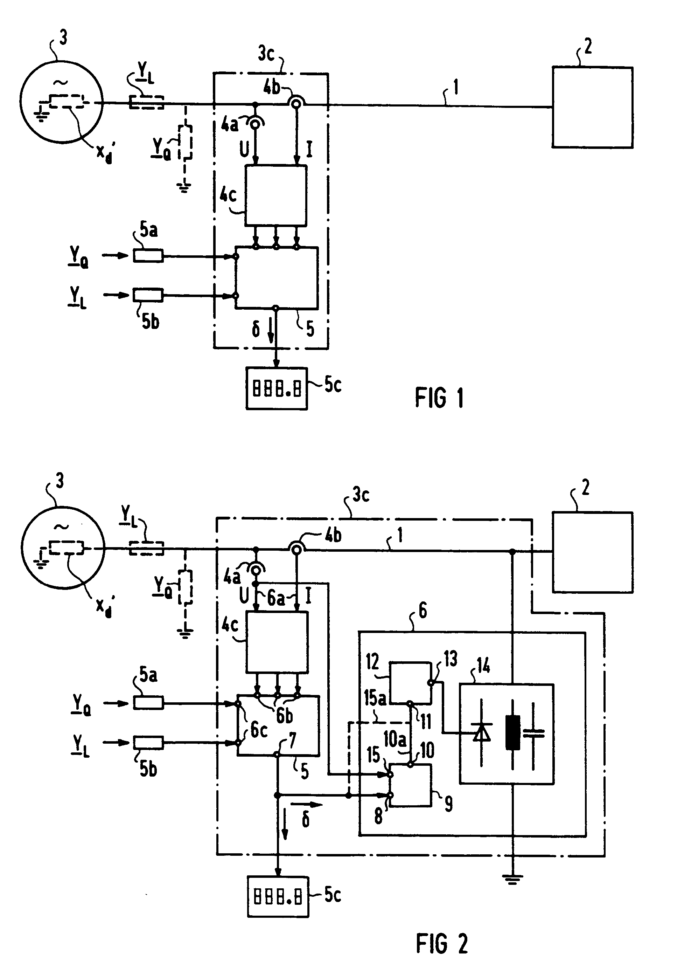

FIG 1 zeigt eine Leitung 1, die ein elektrisches Versorgungsnetz 2 mit einem Generator 3 verbindet. Auf der Leitung 1 sind Fühler 4a, 4b zum Erfassen von Meßwerten für einen Strom I und eine Spannung U angeordnet. Zwischen dem Generator 3 und dem Versorgungsnetz 2 findet über die Leitung 1 ein Energieaustausch statt. Soll eine Bedämpfung von Wirkleistungspendelungen durchgeführt werden, so ist eine Information über die Größe des Polradwinkels des Generators 3 erforderlich. Hierzu wird derart verfahren, daß in einer Anordnung 3c die Meßwerte U und I zumindest einem Meßwertumformer 4c zugeführt werden. Dieser bildet aus den eingegebenen Meßwerten ein Signal V für die Spannung, ein Signal P für einen Wirkleistungfluß und ein Signal Q für einen Blindleistungsfluß. Zusätzlich werden mittels je eines Eingabegliedes 5a, 5b ein Signal $\underline{Y}_Q$ für die Generator- und Leitungsquerreaktanz und ein Signal $\underline{Y}_L$ für die Generator- und Leitungslängsreaktanz vorgegeben. $\underline{Y}_Q$ und $\underline{Y}_L$ stellen dabei Ersatzgrößen dar. Die Signale Q, P, V, $\underline{Y}_Q$ und $\underline{Y}_L$ werden anschließend einer Recheneinrichtung 5 zur Lösung der mathematischen Beziehung

$$\delta = - \tan^{-1} \frac{\text{Im} \left( V - \left( \frac{P - jQ}{V} - \underline{Y}_Q V \right) \underline{Y}_L^{-1} \right)}{\text{Re} \left( V - \left( \frac{P - jQ}{V} - \underline{Y}_Q V \right) \underline{Y}_L^{-1} \right)}$$

zugeführt, wobei Im Imaginärteil, Re Realteil und j komplexer Operator bedeuten. Komplexe Größen sind durch eine Unterstreichung gekennzeichnet. Dabei kann der Term, der innerhalb der Klammer von V subtrahiert wird, als Spannung über der transienten Maschinenreaktanz $X'_d$ angesehen werden. Es ist daher auch günstig, wenn für $\underline{Y}_L$ die transiente Maschinenreaktanz $X'_d$ berücksichtigt ist. In der Recheneinrichtung 5 wird zur Lösung der mathematischen Beziehung ein Ausgangssignal δ gebildet, das als Winkelmaß für den Polradwinkel oder von Wirkleistungspendelungen des Generators 3 dient. Dieses Signal wird an eine Anzeigevorrichtung 5c geführt. Auf diese Weise wird mit der Anordnung 3c ein Ausgangssignal δ bereitgestellt, das insbesondere für die Regelung eines Blindleistungskompensators geeignet ist, da die Wirkleistungspendelung gezielt gedämpft werden können.

In FIG 2 sind zum Ermitteln des Polradwinkels ebenfalls Fühler 4a, 4b zum Erfassen des Stromes I und der Spannung U vorgesehen, deren Meßwerte dem Meßwertumformer 4c zugeführt werden. Die vom Meßwertumformer 4c gebildeten Signale V, P, und Q werden Eingängen 6b der Recheneinrichtung 5 zugeführt, in welche über weitere Eingänge 6c mittels der Eingabeglieder 5a, 5b die Signale $\underline{Y}_Q$ und $\underline{Y}_L$ eingegeben werden. Dabei können auch dynamische Änderungen von $\underline{Y}_L$ und $\underline{Y}_Q$, die beispielsweise von Schalthandlungen oder Netzveränderungen herrühren, in die Recheneinrichtung 5 eingegeben werden. Dies kann beispielsweise manuell erfolgen, oder auch über spezielle leittechnische Einrichtungen, die über die erforderlichen Informationen verfügen.

Ein Ausgang 7 der Recheneinrichtung ist mit einem Eingang 8 einer Regeleinrichtung 9 des Blindleistungskompensators 6 verbunden. Die Regeleinrichtung 9 ist mit ihrem Ausgang 10 über eine Leitung 10a mit einem Eingang 11 einer Steuereinrichtung 12 verbunden. Diese ist wiederum mit ihrem Ausgang 13 mit dem Leistungsteil 14 des Blindleistungskompensators 6 verbunden. Dieser ist auf die Leitung 1 geschaltet. Der Blindleistungskompensator 6 kann im Normalfall beispielsweise spannungsabhängig geregelt sein. Dazu ist ein Eingang 15 der Regeleinrichtung 9 auf den Fühler 4a geschaltet, welcher den Meßwert U für eine Spannung liefert. In dieser Konfiguration kann der spannungsabhängig geregelte Blindleistungskompensator 6 zusätzlich mit dem Ausgangssignal δ der Recheinrichtung 5 beaufschlagt werden, wodurch Blindleistungspendelungen bedämpft werden könnnen.

Alternativ kann das Ausgangssignal δ anstatt auf den Eingang 8 über die strichliniert dargestellte Leitung 15a auch auf den Eingang 11 der Steuereinrichtung 12 geschaltet sein.

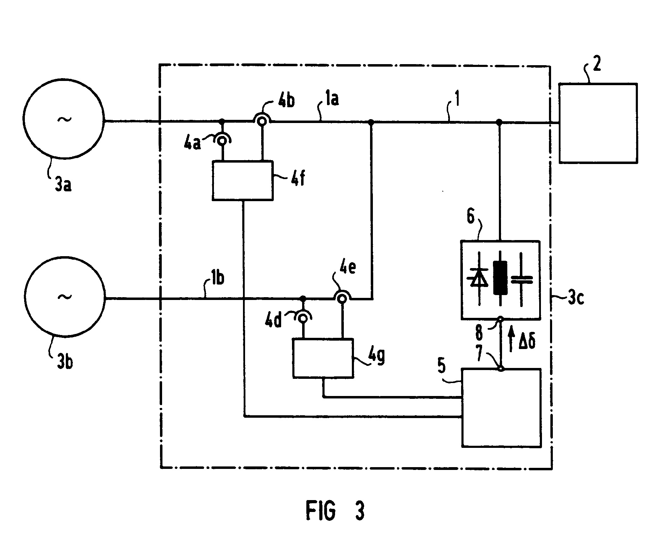

FIG 3 zeigt eine Konfiguration mit einer Anordnung 3c, bei der an das Versorungsnetz 2 über Leitungen 1a und 1b zwei Generatoren 3a, 3b angeschlossen sind. Für beide Generatoren 3a, 3b werden dabei über Fühler 4d, 4e jeweils Meßwerte für Strom und Spannung erfaßt und getrennten Meßwertumformern 4f, 4g zugeführt. Die in den Meßwertumformern 4f und 4g für jeweils jeden Generator 3a, 3b gebildeten Signale V, P und Q werden jeweils getrennt der Recheneinrichtung 5 zugeführt. In der Recheneinrichtung 5 wird dann zunächst jeweils ein Ausgangssinal δa und δb für jeden Generator 3a, 3b und daraus ein Differenzsignal Δδ gebildet. Dieses Differenzsignal Δδ dient dann als Regelgröße für den Blindleistungskompensator, das diesem über einen Ausgang 7 der Recheneinheit 5 dem Eingang 8 zugeführt wird.

Mit der vorliegenden Anordnung kann in einem Versorgungsnetz 2 mit mehreren Generatoren 3a, 3b selektiv die Polradwinkeldifferenz einzelner Generatoren zueinander ermittelt werden. Gegebenenfalls kann bei einer komplexen Konfiguration zunächst eine Reduktion des Netzes auf ein Zweigeneratorssystem vorgesehen werden. Die Werte für die Generator- und Leitungsquerreaktanz $\underline{Y}_Q$ und für die Generator- und Leitungslängsreaktanz $\underline{Y}_L$ sind üblicherweise aus den Netzdaten bekannt und können vom Fachmann vorgegeben werden.

Die erfindungsgemäßen Anordnung ist auch bei anderen Regeleinrichtungen in Versorgungsnetzen, insbesondere in Drehstromnetzen, vorteilhaft anwendbar.

**Patentansprüche**

1. Verfahren zum Ermitteln des Polradwinkels für Wirkleistungspendelungen eines mittels einer Leitung (1) an ein elektrisches Versorgungsnetz (2) angeschlossenen Generators (3), bei dem
   - mittels Fühler (4a, 4b) Meßwerte für einen Strom und eine Spannung an einem beliebigen Ort des Versorgungsnetzes (1) erfaßt werden,
   - die Meßwerte zumindest einem Meßwertumformer (4c) zugeführt werden, der ein Signal V für eine Spannung, ein Signal P für einen Wirkleistungsfluß und ein Signal Q für einen Blindleistungsfluß bildet,
   - ausgehend von einer komplexen Konfiguration des Versorqungsnetzes (2) eine Reduktinn des Versorgungsnetzes (2) zur Ermittlung von Ersatzgrößen für die Generator- und Leitungsquerreaktanz und die Generator- und Leitungslängsreaktanz durchgeführt wird,
   - mittels je eines Eingabegliedes (5a, 5b) ein Signal $\underline{Y}_Q$ für die Generator- und Leitungsquerreaktanz und ein Signal $\underline{Y}_L$ für die Generator- und Leitungslängsraktanz vorgegeben werden,
   - die Signale Q, $\bar{P}$, V, $\underline{Y}_Q$, und $\underline{Y}_L$ einer Recheneinrichtung (5) zur Lösung der mathematischen Beziehung

$$\delta = -\tan^{-1} \frac{\mathrm{Im}\,(V - (\frac{P-jQ}{V} - \underline{Y}_Q V)\,\underline{Y}_L^{-1})}{\mathrm{Re}\,(V - (\frac{P-jQ}{V} - \underline{Y}_Q V)\,\underline{Y}_L^{-1})}$$

   zugeführt werden, wobei Im Imaginärteil, Re Realteil und j komplexer Operator bedeuten und eine Unterstreichung eine komplexe Größe kennzeichnet,
   - in der Recheneinrichtung (5) ein Ausgangssignal δ gebildet wird, und
   - das Ausgangssignal δ, das als Winkelmaß für den Polradwinkel oder von Wirkleistungspendelungen dient, an eine Anzeigeeinrichtung (5c) und/oder eine Steuereinrichtung (12) eines Blindleistungskompensators gegeben wird (FIG 1).

2. Verfahren nach Anspruch 1, bei dem das Ausgangssignal δ der Recheneinrichtung (5) einer Regeleinrichtung (9) des Blindleistungskompensators (6) als Regelgröße zugeführt wird, wobei der Blindleistungskompensator (6) an die Leitung (1) angeschlossen ist (FIG 2).

3. Verfahren nach Anspruch 2, bei dem über eine weitere Leitung (1b) ein weiterer Generator (3b) an das Versorgungsnetz (2) angeschlossen ist, für jeden Generator (3a, 3b) mittels Fühler (4a, 4b, 4d, 4e) Meßwerte für den Strom und die Spannung erfaßt werden und in der Recheneinrichtung (5) für jeden Generator (3a, 3b) zunächst jeweils ein Ausgangssignal δa und δb und daraus ein Differenzsignal Δδ gebildet wird, das der Regeleinrichtung (7) als Regelgröße zugeführt wird (FIG 3).

4. Anordnung zum Ermitteln des Polradwinkels für Wirkleistungspendelungen eines mittels einer Leitung (1) an ein elektrisches Versorgungsnetz (2) angeschlossenen Generators (3), bei der
   - Fühler (4a,4b) an einen beliebigen Ort des Versorgungsnetzes zum Erfassen von Meßwerten für Strom und Spannung angeschlossen sind, die über Meßleitungen (6a) mit zumindest einem Meßwertumformer (4c) verbunden sind, der ein Signal V für eine Spannung, ein Signal P für einen Wirkleistungsfluß und ein Signal Q für einen Blindleistungsfluß bildet,
   - ausgehend von einer komplexen Konfiguration des Versorgungsnetzes (2) eine Reduktion des Versorgungsnetzes (2) zur Ermittlung von Ersatzgrößen für die Generator- und Leitungsquerreaktanz und die Generator- und Leitungslängsreaktanz durchgeführt wird,
   - je ein Eingabeglied (5a, 5b) zum Bilden eines Signales $\underline{Y}_Q$ für die Generator- und Leitungsquerreaktanz und eines Signals $\underline{Y}_L$ für die Generator-und Leitungslängsraktanz vorgesehen ist,
   - die Signale Q, P, V, $\underline{Y}_Q$ und $\underline{Y}_L$ über weitere Meßleitungen auf Eingänge einer Recheneinrichtung zur Lösung der mathematischen Beziehung

$$\delta = -\tan^{-1} \frac{\mathrm{Im}\,(V - (\frac{P-jQ}{V} - \underline{Y}_Q V)\,\underline{Y}_L^{-1})}{\mathrm{Re}\,(V - (\frac{P-jQ}{V} - \underline{Y}_Q V)\,\underline{Y}_L^{-1})}$$

   geschaltet sind, wobei Im Imaginärteil, Re Realteil und j komplexer Operator bedeuten und eine Unterstreichung eine komplexe Größe kennzeichnet und
   - ein das Ausgangssignal δ führender Ausgang (7) der Recheneinrichtung (5) mit einer Anzeigevorrrichtung (5c) und/oder Steuereinrichtung (12) eines Blindleistungskompensators (6) verbunden ist (FIG 2).

5. Anordnung nach Anspruch 4, bei der der Blindleistungskompensator (6) an die Leitung (1) angeschlossen ist und eine Regeleinrichtung (7) hat, die über einen Eingang (8) mit dem Ausgang (7) der Recheneinrichtung (5) verbunden ist.

6. Anordnung nach Anspruch 4 oder 5, bei der über eine weitere Leitung (1b) ein weiterer Generator (3b) an das Versorgungsnetz (2) angeschlossen ist und Mittel zum Bilden von Signalen V, P und Q für jeden Generator (3a, 3b) vorgesehen sind, die der Recheneinrichtung (5) zugeführt werden, in der zunächst Ausgangssignale δa und δb und daraus eine Differenz Δδ gebildet wird, die über den Ausgang (10) der Recheneinrichtung (5) der Regeleinrichtung (7) zugeführt wird (FIG 3).

## Claims

1. Process for determining the load angle for active-power oscillations of a generator (3) connected by means of a line (1) to an electrical supply system (2), wherein
   - by means of sensors (4a, 4b) measured values for a current and a voltage are detected at any point of the supply system (1),
   - the measured values are supplied to at least one measuring transducer (4c) which forms a signal V for a voltage, a signal P for an active-power flow and a signal Q for a reactive-power flow,
   - proceeding from a complex configuration of the supply system (2) a reduction of the supply system (2) for determining substitute variables for the generator and line quadrature-axis reactance and the generator and line direct-axis reactance is carried out,
   - by means of a respective input element (5a, 5b) a signal $\underline{Y}_Q$ for the generator and line quadrature-axis reactance and a signal $\underline{Y}_L$ for the generator and line direct-axis reactance are specified,
   - the signals Q, P, V, $\underline{Y}_Q$, and $\underline{Y}_L$ are supplied to a computing device (5) to solve the mathematical equation

$$\delta = - \tan^{-1} \frac{\text{Im}\,(V - (\frac{P - jQ}{V} - \underline{Y}_Q V)\,\underline{Y}_L^{-1})}{\text{Re}\,(V - (\frac{P - jQ}{V} - \underline{Y}_Q V)\,\underline{Y}_L^{-1})}$$

   with Im signifying the imaginary part, Re the real part and j the complex operator and an underlining characterizing a complex variable,
   - an output signal δ is formed in the computing device (5), and
   - the output signal δ, which serves as angular dimension for the load angle or of active-power oscillations, is transmitted to a display device (5c) and/or a control device (12) of a reactive-power compensator (Figure 1).

2. Process according to claim 1, wherein the output signal δ of the computing device (5) is supplied to a control device (9) of the reactive-power compensator (6) as controlled variable, with the reactive-power compensator (6) being connected to the line (1) (Figure 2).

3. Process according to claim 2, wherein by way of a further line (1b) a further generator (3b) is connected to the supply system (2), for each generator (3a, 3b) by means of sensors (4a, 4b, 4d, 4e) measured values for the current and the voltage are detected and in the computing device (5) for each generator (3a, 3b) first of all a respective output signal δa and δb and from this a differential signal Δδ is formed, which is supplied to the control device (7) as controlled variable (Figure 3).

4. Arrangement for determining the load angle for active-power oscillations of a generator (3) connected by means of a line (1) to an electrical supply system (2), wherein
   - sensors (4a, 4b) are connected to any point of the supply system for detecting measured values for current and voltage, which are connected by way of measuring leads (6a) to at least one measuring transducer (4c), which forms a signal V for a voltage, a signal P for an active-power flow and a signal Q for a reactive-power flow,
   - proceeding from a complex configuration of the supply system (2) a reduction of the supply system (2) for determining substitute variables for the generator and line quadrature-axis reactance and the generator and line direct-axis reactance is carried out,
   - a respective input element (5a, 5b) is provided for the formation of a signal $\underline{Y}_Q$ for the generator and line quadrature-axis reactance and a signal $\underline{Y}_L$ for the generator and line direct-axis reactance,
- the signals Q, P, V, $\underline{Y}_Q$ and $\underline{Y}_L$ are connected by way of further measuring leads to inputs of a computing device to solve the mathematical equation,

$$\delta = - \tan^{-1} \frac{\mathrm{Im}\,(V - (\dfrac{P - jQ}{V} - \underline{Y}_Q V)\,\underline{Y}_L^{-1})}{\mathrm{Re}\,(V - (\dfrac{P - jQ}{V} - \underline{Y}_Q V)\,\underline{Y}_L^{-1})}$$

with Im signifying the imaginary part, Re the real part and j the complex operator and an underlining characterizing a complex variable and
- an output (7) of the computing device (5) carrying the output signal $\delta$ is connected to a display device (5c) and/or control device (12) of a reactive-power compensator (6) (Figure 2).

5. Arrangement according to claim 4, wherein the reactive-power compensator (6) is connected to the line (1) and has a control device (7) which is connected by way of an input (8) to the output (7) of the computing device (5).

6. Arrangement according to claim 4 or 5, wherein by way of a further line (1b) a further generator (3b) is connected to the supply system (2) and means are provided for the formation of signals V, P and Q for each generator (3a, 3b), which are supplied to the computing device (5), in which first of all output signals $\delta a$ and $\delta b$ and from this a difference $\Delta\delta$ is formed, which is supplied by way of the output (10) of the computing device (5) to the control device (7) (Figure 3).


**Revendications**

1. Procédé pour déterminer l'angle de la roue polaire dans le cas d'oscillations de la puissance active d'un générateur (3) raccordé au moyen d'un conducteur (1) à un réseau d'alimentation électrique (2), qui consiste
    - à détecter des valeurs de mesure d'un courant et d'une tension en un emplacement quelconque du réseau d'alimentation (1) au moyen de capteurs (4a, 4b),
    - à envoyer les valeurs de mesure à au moins un transformateur (4c) de valeurs de mesure, qui forme un signal V pour une tension, un signal P pour un flux de puissance active et un signal Q pour un flux de puissance réactive,
    - à effectuer une réduction du réseau d'alimentation (2) à partir d'une configuration complexe du réseau d'alimentation (2), pour déterminer des grandeurs équivalentes pour la réactance transversale du générateur et du conducteur et pour la réactance longitudinale du générateur et du conducteur,
    - à prescrire au moyen de circuits (5a, 5b) respectifs d'introduction, un signal $\underline{Y}_Q$ pour la réactance transversale du générateur et du conducteur et un signal $\underline{Y}_L$ pour la réactance longitudinale du générateur et du conducteur,
    - à envoyer les signaux Q, P, V, $\underline{Y}_Q$ et $\underline{Y}_L$ à un dispositif de calcul (5) pour résoudre la relation mathématique

$$\delta = - \tan^{-1} \frac{\mathrm{Im}\,(V - (\dfrac{P - jQ}{V} - \underline{Y}_Q V)\,\underline{Y}_L^{-1})}{\mathrm{Re}\,(V - (\dfrac{P - jQ}{V} - \underline{Y}_Q V)\,\underline{Y}_L^{-1})}$$

    Im désignant la partie imaginaire, Re la partie réelle et j un opérateur complexe, et un soulignage caractérisant une grandeur complexe,
    - à former un signal de sortie $\delta$ dans le dispositif de calcul (5), et
    - à envoyer le signal de sortie $\delta$, qui est utilisé comme mesure de l'angle de la roue polaire ou d'oscillations de la puissance active, à un dispositif d'affichage (5c) et/ou à un dispositif de commande (12) d'un compensateur de la puissance réactive.

2. Procédé suivant la revendication 1, qui consiste à envoyer le signal de sortie $\delta$ du dispositif de calcul (5) en tant que grandeur de régulation à un dispositif de régulation (9) du compensateur (6) de la puissance réactive, le compensateur (6) de la puissance réactive étant raccordé au conducteur (1) (figure 2).

3. Procédé suivant la revendication 2, qui consiste à raccorder un autre générateur (3b) au réseau d'alimentation (2) par l'intermédiaire d'un autre conducteur (1b), à détecter des valeurs de mesure du courant et de la tension, pour chaque générateur (3a, 3b), au moyen de capteurs (4a, 4b, 4d, 4e), et à former dans le dispositif de calcul (5), pour chaque générateur (3a, 3b), tout d'abord respectivement des signaux de sortie δa et δb, et à partir de là un signal de différence Δδ, que l'on envoie en tant que grandeur de régulation au dispositif de régulation (7) (figure 3).

4. Dispositif pour déterminer l'angle de la roue polaire pour des oscillations de la puissance active d'un générateur (3) raccordé au moyen d'un conducteur (1) à un réseau d'alimentation électrique (2), et dans lequel :

- des capteurs (4a, 4b) sont raccordés, en un emplacement quelconque du réseau d'alimentation, pour détecter des valeurs de mesure du courant et de la tension, capteurs qui sont reliés par l'intermédiaire de conducteurs de mesure (6a) à au moins un transformateur (4c) de valeurs de mesure, qui forme un signal V pour une tension, un signal P pour un flux de puissance active et un signal Q pour un flux de puissance réactive,
- une réduction du réseau d'alimentation (2) est effectuée à partir d'une configuration complexe du réseau d'alimentation (2), pour déterminer des grandeurs équivalentes pour la réactance transversale du générateur et du conducteur et pour la réactance longitudinale du générateur et du conducteur,
- des circuits d'entrée respectifs (5a, 5b) sont prévus pour la formation d'un signal $\underline{Y}_Q$ pour la réactance transversale du générateur et du conducteur et d'un signal $\underline{Y}_L$ pour la réactance longitudinale du générateur et du conducteur,
- les signaux Q, P, V, $\underline{Y}_Q$ et $\underline{Y}_L$ sont envoyés par l'intermédiaire d'autres conducteurs de mesure, à des entrées d'un dispositif de calcul pour résoudre la relation mathématique

$$\delta = -\tan^{-1} \frac{\text{Im} \left( V - \left( \dfrac{P-jQ}{V} - \underline{Y}_Q V \right) \underline{Y}_L^{-1} \right)}{\text{Re} \left( V - \left( \dfrac{P-jQ}{V} - \underline{Y}_Q V \right) \underline{Y}_L^{-1} \right)}$$

Im désignant la partie imaginaire, Re la partie réelle et j un opérateur complexe, et un soulignage caractérisant une grandeur complexe, et
- une sortie (7), qui délivre le signal de sortie δ, du dispositif de calcul (5) est reliée à un dispositif d'affichage (5c) et/ou à un dispositif de commande (12) d'un compensateur (6) de la puissance réactive (figure 2).

5. Dispositif suivant la revendication 4, dans lequel le compensateur (6) de la puissance réactive est raccordé au conducteur (1) et a un dispositif de régulation (7), qui est relié par l'intermédiaire d'une entrée (8) à la sortie (7) du dispositif de calcul (5).

6. Dispositif suivant la revendication 4 ou 5, dans lequel un autre générateur (3b) est raccordé au réseau d'alimentation (2) par l'intermédiaire d'un autre conducteur (1b) et qu'il est prévu des moyens pour former, pour chaque générateur (3a, 3b), des signaux V, P et Q, qui sont envoyés au dispositif de calcul (5), dans lequel des signaux de sortie δa et δb sont tout d'abord formés, et à partir d'eux une différence Δδ, qui est envoyée par l'intermédiaire de la sortie (10) au dispositif de calcul (5) du dispositif de régulation (7).

FIG 1

FIG 2

FIG 3